# FASCICULE DE BREVET EUROPEEN

(11) **EP 1 814 654 B1**
(45) Date de publication et mention de la délivrance du brevet: **29.07.2015**
(21) Numéro de dépôt: 05815267.9
(22) Date de dépôt: 28.10.2005
(51) Int. Cl.: B01J 8/00, B01J 8/04, B01J 8/08, C10G 50/02

(54) **DISPOSITIF REACTIONNEL A PLUSIEURS ZONES EN LIT MOBILE AVEC APPOINT DANS CHAQUE ZONE DE CATALYSEUR REGENERE OU FRAIS**
REAKTIONSGERÄT MIT EINIGEN WIRBELBETTZONEN MIT VERSORGUNG IN JEDER REGENERIERTEN ODER NEUEN KATALYSATORZONE
REACTION DEVICE HAVING A NUMBER OF MOVING BED ZONES WITH SUPPLEMENTING IN EACH REGENERATED OR FRESH CATALYST ZONE

(30) Priorité: 09.11.2004 FR 0411961
(43) Date de publication de la demande: 08.08.2007
(73) Titulaire: Institut Français du Pétrole, 92852 Rueil Malmaison Cedex (FR)
(72) Inventeur: LOURET, Sylvain, F-69007 Lyon (FR); FONT, Patrice, F-69440 Mornant (FR); LACOMBE, Sylvie, F-69230 Saint Genis Laval (FR); SIMON, Laurent, F-69003 Lyon (FR)
(86) Numéro de dépôt international: PCT/FR2005/002721
(87) Numéro de publication internationale: WO 2006/051185

(56) Documents cités:
- DE-B- 1 028 095
- FR-A- 1 041 780
- FR-A- 2 129 913
- GB-A- 634 534
- US-A- 2 336 041
- US-A- 2 376 365
- US-A- 4 547 151

## Description

### Domaine de l'invention

La présente invention concerne un dispositif réactionnel à l'intérieur duquel est réalisée au moins une réaction catalytique présentant un effet thermique important, généralement un dégagement de chaleur (réactions dites exothermiques) ou parfois une absorption de chaleur (réactions dites endothermiques).

Elle concerne également un procédé d'oligomérisation de charges oléfiniques (c'est-à-dire une polymérisation ou addition limitée à essentiellement 2 à 6 monomères ou molécules de base). Elle concerne notamment les réactions d'addition d'une oléfine sur un autre composé présent dans la charge, par exemple une oléfine, un composé soufré, un composé azoté, une molécule aromatique, lesdites réactions d'addition visant à augmenter le poids moléculaire de ce composé.

Elle concerne plus particulièrement les réactions d'oligomérisation à partir de coupes hydrocarbures oléfiniques contenant de 2 à 12 atomes de carbone, préférentiellement de 3 à 7 atomes de carbone, et plus particulièrement de 4 à 6 atomes de carbone, les réactions d' oligomérisation permettant de produire des coupe essence, diesel ou lubrifiant, et plus particulièrement des hydrocarbures de la coupe diesel.

L'invention concerne un dispositif réactionnel comprenant un réacteur à plusieurs zones réactionnelles, empilées verticalement et séparées par des zones d'échange thermique, et comportant la possibilité d'alimenter chaque zone réactionnelle en catalyseur comprenant un appoint de catalyseur régénéré ou frais.

### Examen de l'art antérieur

Le brevet US 2002/0011428 A1, décrit un réacteur à lit mobile multi-étagés destiné à la mise en oeuvre de réactions d'hydrotraitement. Un système, objet d'autres brevets (notamment le brevet US 5076908), permet d'ajouter et de retirer du catalyseur en continu ou en semi-continu de chaque étage du réacteur. La charge s'écoule d'un étage à l'autre. En revanche, le catalyseur d'un étage ne s'écoule pas dans l'étage suivant. Il a été trouvé qu'un tel système peut également être utilisé pour mettre en oeuvre une réaction d'oligomérisation. Cependant, le système décrit ne permet pas de contrôler efficacement le profil de température au sein de chaque section réactionnelle.

Le brevet WO 02/04575 décrit un procédé d'oligomérisation sur zéolite mettant en oeuvre un réacteur de type tubulaire, en lit fixe, ou tout autre réacteur pouvant être utilisé afin de réaliser la réaction d'oligomérisation. Le brevet décrit une méthode permettant d'ajouter et de soutirer du catalyseur en continu ou en semi-continu du réacteur. En revanche, le problème de contrôle de l'exothermicité de la réaction n'est pas abordé.

Le brevet EP 1236506A1 décrit un réacteur multi-étagés à faible épaisseur de lit avec échangeur thermique interne, utilisé principalement dans le cadre des réactions de déshydrogénation des paraffines longues. Ce système permet de contrôler de façon précise la température dans chaque section réactionnelle.

Les deux demandes de brevet précitées, qui décrivent des réacteurs superposés ou multi-étagés, ne décrivent pas toutefois de moyens permettant de conserver une activité suffisante et/ou suffisamment homogène du catalyseur entre les différents étages ou réacteurs.

De manière générale, la désactivation des catalyseurs, et en particulier des catalyseurs comprenant une zéolite utilisés en vue de la production des coupes diesel par oligomérisation est rapide. Il est donc nécessaire de procéder régulièrement au remplacement du catalyseur afin de maintenir les performances du réacteur en termes de sélectivité et de rendement. La technologie employée pour des réactions catalytiques avec circulation et régénération du catalyseur (continue ou semi-continue) est celle du lit mobile constitué d'un empilement de grains de catalyseurs contenus dans une enceinte, lesdits grains étant en déplacement (à vitesse moyenne très lente, en continu ou discontinu) du haut vers le bas du réacteur sous l'effet de la force de gravité. Les grains de catalyseur ont souvent une forme sensiblement sphérique pour facilité leur écoulement, et des dimensions typiques comprises entre 0,5 et 5 mm de diamètre, et de manière préférée entre 1 à 4 mm. Cette technologie permet un remplacement progressif du catalyseur lors de la marche du réacteur, par du catalyseur frais ou régénéré en tête de réacteur.

Le taux de circulation du catalyseur étant toutefois limité, il y a typiquement une activité beaucoup plus faible en bas de réacteur, la ou le catalyseur est usé, qu'en haut de réacteur, ou le catalyseur est régénéré. Ceci conduit à des disparités de l'activité catalytique selon les zones réactionnelles, induisant des pertes de conversion et/ou de sélectivité.

Le document FR 2 129 913 décrit une unité de conversion d'une charge d'hydrocarbures comprenant une pluralité de zones catalytiques élémentaires de sections relativement grandes disposées de manière étagée. Les zones catalytiques élémentaires de sections relativement grandes sont en outre reliées entre elles par des zones catalytiques élémentaires de sections relativement petites.

On connaît également le document FR 1 041 780 qui divulgue un procédé pour le séchage, le chauffage, la distillation, la combustion sans flamme ou pour tout autre traitement par la chaleur de matières en morceaux, ou pulvérulentes, ou à l'état de boues, en utilisant des supports de chaleur en grains que l'on amène en contact intime avec la matière à chauffer et que l'on maintient en mouvement permanent par rapport à cette matière.

Le document GB 634 534 concerne un procédé de conversion catalytique du monoxyde de carbone avec de l'hydrogène en hydrocarbures. Le procédé implique :
- une première étape de conversion dans une première zone de conversion mettant en oeuvre une suspension de catalyseur finement divisé dans un gaz, puis
- une étape de soutirage du monoxyde de carbone et de hydrogène n'ayant pas réagi de la première zone de conversion
- une seconde étape de conversion du monoxyde de carbone et de l'hydrogène n'ayant pas réagi dans une seconde zone de conversion mettant en oeuvre une masse fluidisé dense de catalyseur dans des conditions pour réaliser la conversion complète du monoxyde de carbone et de l'hydrogène n'ayant pas réagi.

Le document US 2 376 365 divulgue à la figure 1 un dispositif réactionnel comprenant deux réacteurs disposés l'un au-dessus de l'autre et dans lequel le catalyseur circule à travers les deux réacteurs de manière gravitaire. Le dispositif comporte en outre des moyens d'échange de chaleur agencés entre les deux réacteurs successifs.

Le document DE 1 028 095 a pour objet un procédé pour sécher un matériau solide par mise en contact dudit matériau avec des corps de nature particulaire fixes qui sont chauffés.

Par ailleurs, pour les réactions à forte endothermicité, ou à forte exothermicité comme les réactions d'oligomérisation, des moyens d'échange de chaleur avec le fluide réactionnel sont de préférence mis en place à l'intérieur du dispositif réactionnel, et notamment du réacteur, de manière à maintenir la différence de température entre l'entrée et la sortie du réacteur dans des limites voulues.

La présente invention décrit un dispositif réactionnel, et un procédé de conversion chimique d'hydrocarbures utilisant ce dispositif, permettant de prévenir ou de limiter des disparités d'activité catalytique, notamment à capacité de régénération de catalyseur donnée (nécessairement limitée) et de traiter au mieux les problèmes liés à la mise en oeuvre de réactions fortement exothermiques ou endothermiques, notamment de réactions d' oligomérisation.

### Description sommaire de l'invention:

Bien que son domaine d'application soit plus étendu et concerne l'ensemble des réactions exothermiques ou endothermiques en phase gaz et/ou liquide pour lesquelles typiquement un maintien de l'activité catalytique, et souvent un contrôle thermique sont essentiels, en particulier les réactions d'addition d'une oléfine sur un autre composé présent dans la charge, par exemple une oléfine, un composé soufré, un composé azoté, une molécule aromatique, lesdites réactions d'addition visant à augmenter le poids moléculaire de ce composé, la présente invention sera illustrée dans le cas particulier d'une réaction exothermique d'oligomérisation d'oléfines au sein d'une charge oléfinique (comprenant souvent de 20% à 100% poids d'oléfines).

En particulier, le présent dispositif est particulièrement adapté à la mise en oeuvre d'une réaction d'oligomérisation de coupes hydrocarbures oléfiniques contenant de 2 à 12 atomes de carbone, préférentiellement de 3 à 7 atomes de carbone, et plus préférentiellement encore de 4 à 6 atomes de carbone, permettant d'obtenir des hydrocarbures dans la gamme des coupes essence, diesel ou huile lubrifiante, et plus particulièrement des hydrocarbures de la coupe diesel, d'intervalle de distillation typique compris entre 160 et 370°C, notamment entre 200 et 365°C.

Il est important d'éviter des disparités importantes de l'activité catalytique entre les différentes zones réactionnelles, qui génèrent des pertes de conversion.

De plus, la réaction d'oligomérisation est fortement exothermique. Une température trop élevée favorise les réactions de craquage des composés oligomérisés et n'est donc pas souhaitable.

Une température trop basse dans certaines zones réactionnelles limite la conversion en composés suffisamment lourds recherchés dans la composition d'une coupe diesel. Il est donc souhaitable de contrôler précisément les températures au sein des diverses zones réactionnelles. En particulier, il est intéressant d'ajuster le niveau de température d'une zone réactionnelle catalytique en fonction de l'activité du catalyseur au sein de ladite zone.

Pour résoudre les problèmes techniques précités, l'invention propose un dispositif réactionnel comprenant des moyens pour maintenir une activité catalytique notable, avec de faibles disparités entre les différentes zones réactionnelles, mettant en oeuvre, typiquement à l'entrée de chaque zone réactionnelle, une addition de catalyseur frais ou régénéré, pour son mélange avec une partie au moins du catalyseur usé (partiellement) issu de la zone réactionnelle amont. Elle propose également une variante préférée du dispositif avec intégration de moyens thermiques pour le réchauffage ou le refroidissement du fluide réactionnel au niveau d'un rétrécissement de passage de catalyseur utilisé pour la mise en oeuvre de cet appoint de catalyseur frais ou régénéré.

On accroît ainsi sensiblement la sélectivité et la conversion par rapport à l'art antérieur, notamment pour des réactions d'oligomérisation.

L'invention propose également un procédé pour réaliser des réactions chimiques dans ce dispositif, en particulier un procédé d 'oligomérisation de charges oléfiniques.

### Description sommaire des figures :

La figure 1 représente une vue du dispositif réactionnel dans sa configuration de base.
La figure 2 représente une vue du dispositif réactionnel dans une variante comportant une injection d'un fluide réactionnel additionnel entre deux zones réactionnelles.
La figure 3 représente une vue du dispositif réactionnel dans une variante comportant au moins une partie des moyens d'échange thermique à l'extérieur de l'enceinte réactionnelle.

### Description détaillée de l'invention:

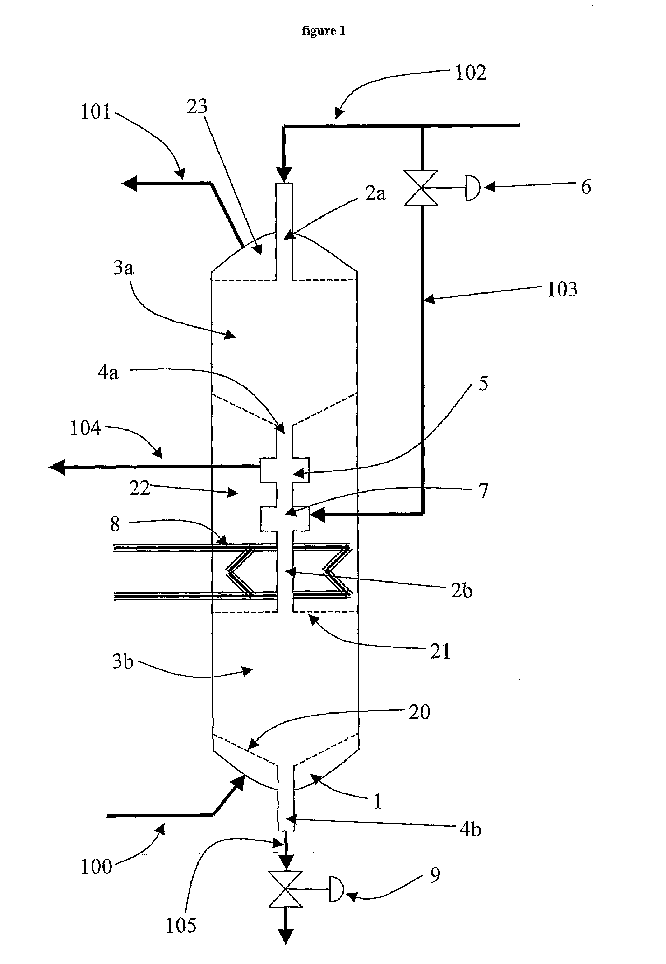

L'invention sera mieux comprise en référence aux figures 1 à 3 qui illustrent les différents modes de réalisation de l'invention sans toutefois en limiter la portée.

L'invention est illustrée dans sa configuration de base par la figure 1.

Sous une forme générale, l'invention concerne un dispositif réactionnel comprenant un réacteur catalytique de forme allongée le long d'un axe sensiblement vertical, ce réacteur comprenant dans une même enceinte plusieurs zones réactionnelles catalytiques étagées verticalement, ce réacteur étant adapté à la circulation d'au moins un catalyseur granulaire en lit mobile descendant successivement dans chacune des zones réactionnelles, et comprenant des moyens (100) d'introduction et (101) d'évacuation du fluide réactionnel, des moyens (102) d'amenée de catalyseur frais ou régénéré en tête de l'enceinte réactionnelle, et des moyens (105) d'évacuation de catalyseur usé en partie inférieure de l'enceinte, ce réacteur comprenant notamment :
a) une zone réactionnelle supérieure Za (3a), et une zone réactionnelle Zb (3b), située juste en dessous de la zone réactionnelle supérieure Za, ces zones réactionnelles Za et Zb étant deux zones réactionnelles successives directement reliées d'une part par un passage du fluide réactionnel, et d'autre part par un passage de catalyseur de la zone Za vers la zone Zb.
b) des moyens d'introduction (2a) de catalyseur régénéré et/ou de catalyseur frais (102) dans la zone réactionnelle supérieure Za (3 a),
c) des moyens de collecte (4a) du catalyseur usé issu de la zone réactionnelle supérieure Za , reliés à :
d) des moyens de mélange, par exemple une chambre de mélange (7), d'une partie au moins du catalyseur usé ainsi collecté avec un appoint de catalyseur frais ou régénéré, reliés à :
e) des moyens d'introduction du mélange de catalyseurs ainsi réalisé dans la zone réactionnelle Zb (3b).

Les deux zones Za et Zb sont selon l'invention des zones réactionnelles successives, ce qui signifie que les effluents de l'une de ces zones alimentent l'autre zone sans traverser une autre zone réactionnelle. Elles sont typiquement séparées par un rétrécissement du passage de catalyseur, situé au niveau de la collecte du catalyseur usé (typiquement partiellement) issu de Za.

L'invention permet d'accroître l'activité catalytique du catalyseur alimentant la zone Zb, par un ajout de catalyseur régénéré et/ou frais et donc de réduire les disparités d'activité catalytique entre les zones réactionnelles.

De façon préférée, le dispositif représenté à la figure 1, comprend des moyens de soutirage et d'évacuation (104) d'une partie dudit catalyseur usé issu de la zone réactionnelle supérieure Za reliés aux moyens de collecte. Ceci permet d'éliminer une partie (par exemple de 10 à 70 %, et souvent de 15 à 50%) du catalyseur usé, avant l'introduction de catalyseur régénéré et/ou frais.

Ainsi, l'activité moyenne du catalyseur en mélange alimentant Zb est augmentée, sans généralement augmenter de façon notable le débit total de catalyseur entrant dans Zb, voire en maintenant constant le débit de catalyseur circulant dans Za et dans Zb. A débit total constant de catalyseur frais et/ou régénéré, l'invention permet d'obtenir un certain rééquilibrage de l'activité catalytique entre les différentes zones réactionnelles.

Cet appoint de catalyseur régénéré et/ou frais peut aussi représenter par exemple de 10 à 70 %, et souvent de 15 à 50% du catalyseur alimentant Za en tête de réacteur, ou bien alimentant Zb.

Typiquement, les deux zones réactionnelles successives Za et Zb sont reliées par un circuit de circulation du fluide réactionnel traversant un moyen d'échange thermique (8), interne ou externe audit réacteur, par exemple un four de réchauffage ou un échangeur de chaleur (typiquement avec un fluide thermique auxiliaire) pour le réchauffage ou le refroidissement du fluide réactionnel. De préférence, ce moyen d'échange thermique (8) est disposé à l'intérieur du réacteur, dans une zone intermédiaire située entre les deux zones réactionnelles successives Za et Zb. Ce peut être en avantageusement un échangeur de chaleur disposé dans la zone intermédiaire, au niveau d'un rétrécissement du passage de catalyseur de la zone Za vers la zone Zb.

Optionnellement, la zone intermédiaire comprend des moyens d'introduction (10) d'un ou plusieurs fluides réactionnels additionnels (106), et de mélange de ce ou ces fluides avec le fluide réactionnel circulant entre les zones réactionnelles successives Za et Zb. Il peut être en particulier utile d'ajouter un nouveau réactif chimique, pour réaliser une réaction subséquente à celle réalisée dans la zone amont, par exemple une réaction d'alkylation d'une molécule aromatique ou d'un mélange d'aromatiques, et/ou d'introduire un gaz de recyclage riche en hydrogène (comprenant plus de 50% et souvent plus de 70% molaire d'H2), afin d'accroître la quantité d'hydrogène présent. Ce gaz peut aussi avoir un effet thermique, de réchauffage ou plus fréquemment de refroidissement des effluents avant qu'ils ne rentrent dans la zone réactionnelle aval.

Le dispositif de l'invention, et toutes ses variantes telles que décrites dans la présente demande, peuvent être utilisés notamment dans le cadre d'un procédé de conversion chimique d'hydrocarbures, et en particulier d'un procédé d 'oligomérisation de charges oléfiniques ayant de 2 à 12 atomes de carbone, ce ou ces procédé(s) constituant un autre objet de l'invention.

Dans un tel procédé, notamment d'oligomérisation, les conditions typiques sont les suivantes : la pression est comprise entre 0,1 et 10 MPa et préférentiellement entre 0,3 et 7 MPa, la température est comprise entre 40 et 600°C et préférentiellement entre 60 et 400°C, la vitesse spatiale horaire VVH est comprise entre 0,01 et 100 h⁻¹ et préférentiellement entre 0,4 et 30 h^{- 1}, et le catalyseur circule dans chaque zone réactionnelle à une vitesse (moyenne) comprise entre 1 cm/heure et 200 cm/heure et préférentiellement entre 2 cm/heure et 100 cm/heure. L'invention est particulièrement adaptée aux procédés dans lesquels on choisit les conditions opératoires : température, pression, VVH, de façon à limiter la variation de température dans chacune des zones réactionnelles à une ou plusieurs valeurs comprises entre 2°C et 50°C.

### Description détaillée des figures :

On se réfère maintenant à nouveau à la figure 1. Dans le dispositif représenté, le catalyseur parcourt l'ensemble des zones réactionnelles en courant descendant, et la charge parcourt également l'ensemble des zones réactionnelles mais à contre-courant du catalyseur. Les zones réactionnelles représentées sont du type réacteur axial. Toutefois, une configuration dans laquelle le fluide réactionnel circulerait à co-courant du catalyseur, c'est à dire de haut en bas est également parfaitement possible dans le cadre de l'invention. Par ailleurs, les zones réactionnelles peuvent être aussi du type réacteur radial (et pas uniquement du type réacteur axial).

Le catalyseur frais et/ou régénéré est alimenté, principalement en général, en tête du réacteur par la ligne (102), puis le conduit (2a). Ce catalyseur s'écoule lentement, de façon continue ou discontinue dans une zone Za, référencée (3a) sur la figure 1, qui est la zone réactionnelle supérieure. En partie basse de cette zone, il est collecté dans une zone de collecte (4a), puis s'écoule dans la chambre (5). Une fraction de ce catalyseur, partiellement usé, est soutirée par le conduit (104), typiquement pour être régénérée. La chambre (5) peut être munie de moyens (non représentés) pour faciliter l'extraction d'un produit granulaire tel que du catalyseur, par exemple une vis d'extraction, ou un bidon de transport pneumatique, ou un lit fluidisé ou tout autre moyen connu de l'homme du métier. On peut également utiliser un conduit (104) incliné d'au moins 60° par rapport à l'horizontale et optionnellement des injections de gaz d'aération du catalyseur (par exemple de l'azote) pour faciliter l'évacuation du catalyseur.

La partie non extraite du catalyseur présent dans la chambre (5) s'écoule dans la chambre de mélange (7), pour être mélangée avec une autre partie du catalyseur frais et/ou régénéré, introduit par la ligne (103), via la vanne (6). On peut utiliser un conduit (103) incliné d'au moins 60° par rapport à l'horizontale, y compris dans sa partie terminale, et optionnellement des injections de gaz d'aération du catalyseur (par exemple de l'azote) pour faciliter l'introduction du catalyseur frais et/ou régénéré.

La chambre de mélange (7) peut être munie de moyens (non représentés) pour faciliter le mélange de catalyseur frais/régénéré et de catalyseur partiellement usé. On peut notamment utiliser un pannier rotatif pour brasser le catalyseur dans la zone (7), ou bien des pales de brassage disposées dans la zone (7), et mises en mouvement par un moteur externe. On peut également utiliser un lit fluidisé ou tout autre système de mélange de granulés connu.

Le mélange de catalyseurs ainsi formé, a une activité catalytique été augmentée par rapport à celle du catalyseur usé issu de la zone Za. Ce mélange traverse un passage à rétrécissement (2b), puis alimente la zone Zb, référencée (3b) sur la figure 1, qui est immédiatement inférieure à Za (du point de vue des zones réactionnelles).

Le catalyseur usé issu de la zone Zb (3b) circule dans un conduit d'extraction (4b), puis est évacué du réacteur par le conduit (105) sur lequel se trouve la vanne (9). Il est ensuite envoyé vers une zone de régénération (non représentée) par l'intermédiaire d'un système de transport de particules au moyen d'un fluide de transport liquide ou gazeux (par exemple de l'azote), selon les technologies bien connues de l'homme du métier concernant le lit mobile. On peut notamment utiliser, au niveau du conduit (105) ou en dessous de la vanne (9), un ballon de recette du catalyseur usé permettant le stockage d'une quantité déterminée de catalyseur avant son évacuation séquentielle par transport pneumatique, au moyen généralement d'un fluide primaire d'aération du catalyseur, et d'un fluide secondaire de transport.

Les technologies permettant d'introduire, d'extraire, de mélanger, ou de transporter des produits granulaires sont des technologies génériques bien connues de l'homme du métier, auxquelles l'invention n'est pas liée.

La zone de régénération du catalyseur, non représentée, peut être équipée d'un élutriateur ou de tout autre moyen permettant de séparer les particules fines créées au cours des diverses opérations de transport du catalyseur. Le catalyseur régénéré (après notamment une oxydation contrôlée des dépôts carbonés) est typiquement recyclé par les conduits (102) et (103), avec un appoint de catalyseur frais. Une fraction du catalyseur de la boucle (souvent du catalyseur usé) est généralement évacué pour permettre l'appoint de catalyseur frais en maintenant constante la quantité totale de catalyseur mis en oeuvre.

Le fluide réactionnel, par exemple une charge d'hydrocarbures oléfiniques en C4-C6 (ayant essentiellement de 4 à 6 atomes de carbone), est alimentée par le conduit (100) dans la chambre d'alimentation 1, traverse la zone réactionnelle Zb (3b) remplie de catalyseur, puis la zone intermédiaire (22) ne contenant pas de catalyseur, rentre ensuite dans la zone réactionnelle Za (3a) remplie de catalyseur, puis rentre dans la chambre (23) avant d'être évacué par le conduit (101). Les zones réactionnelles Za et Zb sont avantageusement munies en partie haute et basse de grilles perforées (représentées en pointillé sur les figures) pour permettre le passage du fluide réactionnel. Ces grilles peuvent être inclinées d'un angle de 60° ou plus, en partie basse, pour faciliter l'écoulement du catalyseur.

Un échangeur thermique (8) à circulation de fluide thermique est disposé à l'intérieur du réacteur, dans la zone intermédiaire (22) (elle-même disposée à l'intérieur du réacteur), pour réaliser un échange thermique avec le fluide réactionnel transitant entre Zb et Za. Cet échangeur thermique est avantageusement disposé au niveau du rétrécissement 2b du passage de catalyseur, du fait de la place ainsi dégagée à l'intérieur du réacteur.

Cet échangeur thermique fait généralement appel à un fluide de réchauffage ou de refroidissement circulant à l'intérieur de tubes, l'ensemble des tubes formant par exemple une ou plusieurs épingles plongeant au sein du fluide réactionnel dans la zone intermédiaire (22). L'échangeur peut cependant être de tout type connu de l'homme du métier, l'invention n'étant aucunement liée à la technologie particulière de cet échangeur.

Divers fluides sous pression peuvent être utilisés comme fluide de réchauffage ou de refroidissement : vapeur d'eau, air, eau, hydrogène ou gaz de recyclage riche en hydrogène, azote, sels fondus, huile aromatique, etc...

La figure (2) représente un autre dispositif réactionnel selon la présente invention, comportant les mêmes éléments que ceux du dispositif de la figure 1. Il comprend en sus un conduit (106) pour l'alimentation d'un fluide réactionnel additionnel, pour un appoint de réactif et/ou un appoint d'hydrogène. ce fluide est distribué dans la zone intermédiaire (22) via une rampe de distribution (10) pour faciliter son mélange homogène avec le fluide réactionnel issu de la zone Zb. Le mélange est également favorisé par le fait que la zone intermédiaire (22) est exempte de catalyseur.

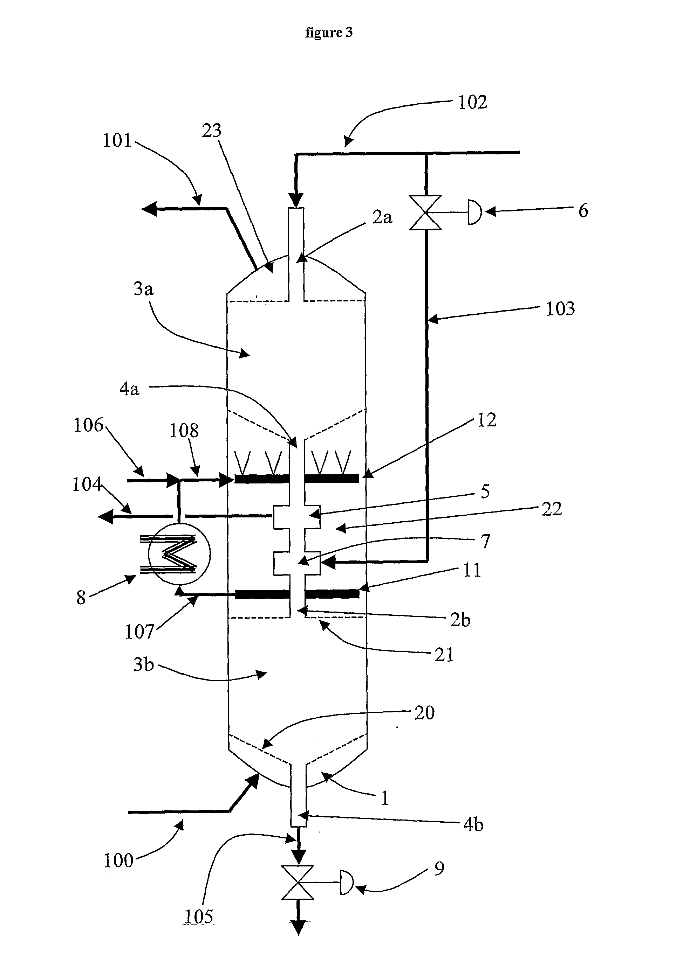

Dans le dispositif de la figure 3, le dispositif réactionnel comprend un échangeur de chaleur (8) qui est externe au réacteur. Le fluide réactionnel issu de la zone Zb est collecté par le conduit (11), alimente l'échangeur (8), puis est réintroduit dans le réacteur, après ajout du fluide réactionnel additionnel, via le conduit (108) et la rampe de distribution (12), qui font également partie du dispositif réactionnel.

Les avantages du, ou des dispositif(s) réactionnel(s) selon la présente invention par rapport aux dispositifs connus de l'art antérieur sont :
- une nette amélioration des performances (conversion, sélectivité, rendement)
- une fiabilité plus importante de l'installation due à la simplicité et à la compacité des moyens utilisés, en particulier des moyens d'échange thermique mis en oeuvre.
- Un coût de construction et d'installation réduits, du fait de la compacité.

Un fonctionnement type du dispositif de la figure 1 est le suivant : Le débit de l'appoint de catalyseur régénéré, ou éventuellement de catalyseur frais, est défini de manière à maintenir un niveau d'activité déterminé sur chaque zone réactionnelle. Par exemple, on pourra définir ce débit d'appoint de catalyseur en fonction d'une caractéristique du fluide réactionnel en sortie de zone réactionnelle. Cette caractéristique peut être une température, une composition, une conversion, ou toute autre caractéristique physico-chimique mesurable en ligne. Les corrélations qui relient l'une ou plusieurs de ces grandeurs mesurables en ligne et le niveau d'activité du catalyseur dépendent de la réaction mise en oeuvre, du type de catalyseur et de sa vitesse de circulation. Un moyen simple est notamment de contrôler la conversion dans la zone Zb, ou la variation de température (delta T) du fluide réactionnel dans cette zone, ou bien la température de sortie de cette zone, par action sur le débit d'appoint de catalyseur régénéré et/ou frais : Si la valeur mesurée du delta T est inférieure à la valeur prévue (dépendant typiquement de la composition initiale de la charge), ou si la valeur de la température de sortie de la zone correspond à une réaction insuffisante, on accroît le débit d'appoint de catalyseur régénéré et/ou neuf dans cette zone, et inversement on réduit l'appoint si la conversion dans la zone (déduite du delta T ou de la température de sortie) est trop importante. On peut, de façon simultanée, évacuer la même quantité de catalyseur usé que celle de l'appoint de catalyseur, avant de réaliser le mélange, pour maintenir constant le débit global de catalyseur dans la zone Zb.

Le débit de catalyseur d'appoint peut donc être entièrement automatisé. En alternative, il peut être ajusté à certains moments (par exemple une ou deux fois par jour) par l'opérateur, au vu notamment des températures et/ou du delta T précité.

Le réchauffage ou le refroidissement du fluide réactionnel dans l'échangeur (8) (delta T) peut être contrôlé par notamment le débit ou le niveau de température du fluide thermique circulant dans l'échangeur (8).

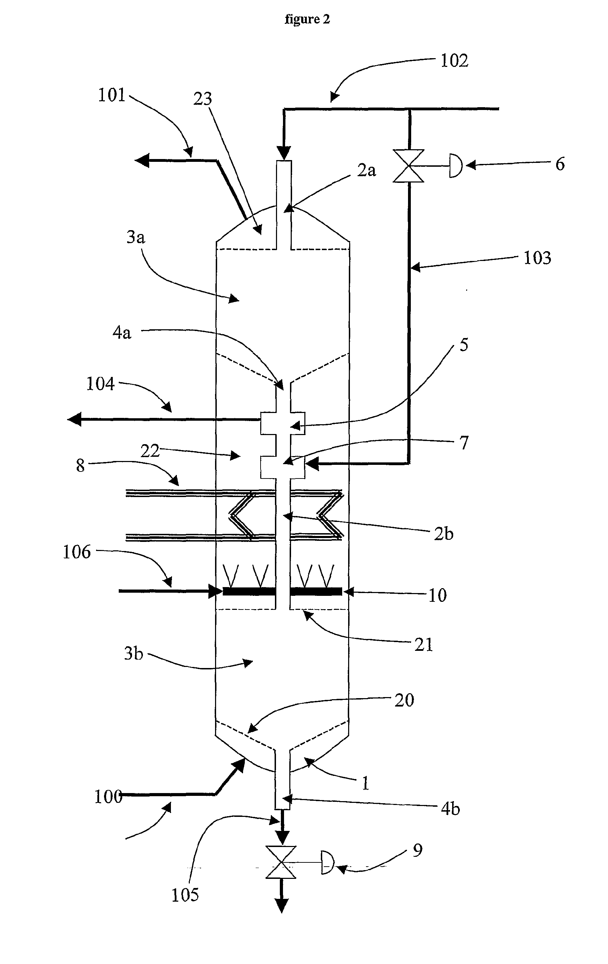

Les dispositifs des figures 2 et 3 fonctionnent de façon analogue. On utilise dans ces dispositifs un appoint de réactifs et/ou d'hydrogène alimenté par le conduit (106). Cet appoint est typiquement à débit et température contrôlés.

Le catalyseur circulant dans le dispositif réactionnel selon l'invention peut être de divers types. Dans le cas d'un dispositif réactionnel d'oligomérisation, on peut utiliser notamment tout type de catalyseur acide permettant l'oligomérisation, par exemple un catalyseur amorphe de type silice-alumine ou de type acide phosphorique solide ou de type résine échangeuse d'ion, ou alors un catalyseur présentant une sélectivité de forme, par exemple un catalyseur zéolithique, par exemple un catalyseur zéolithique de type structural MFI, FER, EUO, TON, LTL, MOR, MTT, MEL, MWW, MTW ou les zéolithes NU-86, NU-87, NU-88, IM-5.

Ces catalyseurs acides zéolithiques peuvent être utilisés en l'état ou après modifications, les dites modifications affectant de préférence l'acidité du catalyseur, le terme acidité désignant aussi bien
la force propre des sites acides que la concentration en sites acides.

Ces modifications peuvent affecter la charpente de la zéolithe, par exemple s'il s'agit d'une désalumination par vapotraitement ou par traitement acide, et/ou affecter la surface de la zéolithe, par exemple (i) par des échanges de protons par des cations de types alcalins, (ii) par dépôts de phase inerte sur la surface des zéolithes.

Les conditions opératoires préférées sont celles utilisées de manière standard pour l'oligomérisation des oléfines par des catalyseur de type solides acides:
- une température comprise entre 100°C et 300°C
- une pression comprise entre 0,1 et 7 MPa
- une VVH (vitesse spatiale exprimée comme le rapport du débit volumique de charge au volume de catalyseur contenu dans la zone réactionnelle) comprise entre 0,01 et 100 h⁻¹.

Le dispositif selon l'invention est particulièrement adapté aux réactions d'oligomérisation d'oléfines, mais il peut être plus généralement utilisé pour tout type de réaction exothermique ou endothermique, se déroulant en phase gaz et/ou liquide, et pour lesquelles un contrôle fin du profil de température dans chaque zone réactionnelle est nécessaire, en particulier les réactions d'addition d'une oléfine sur un autre composé présent dans la charge, par exemple une oléfine, un composé soufré, un composé azoté, une molécule aromatique, lesdites réactions d'addition visant à augmenter le poids moléculaire de ce composé, en particulier les réactions d'alkylation de composés thiophéniques par des oléfines, la métathèse des oléfines. Le dispositif selon l'invention peut également être utilisé pour les réactions d'isomérisation squelettale des oléfines légères telles que, par exemple, les oléfines à 4 ou 5 atomes de carbone.

Dans le cas de réactions exothermiques, le fluide thermique de refroidissement (réfrigérant) peut être tout fluide adapté à réaliser l'échange thermique dans de bonnes conditions, notamment en respectant une différence moyenne de température entre le fluide réactionnel et le fluide de refroidissement d'au moins 5°C et préférentiellement d'au moins 10°C. L'invention n'est aucunement liée à un fluide de refroidissement ou de réchauffage particulier.

### Exemples

Les exemples suivants concernent des applications du dispositif réactionnel selon l'invention à des réactions d'oligomérisation de coupes C3, C4 et C6.

Les exemples 1, 3 et 5 sont selon l'art antérieur. Les exemples 2, 4 et 6 sont selon l'invention, et sont associés respectivement aux exemples 1, 3 et 5 pour faire ressortir l'effet du dispositif selon invention par rapport à une mise en oeuvre en lit fixe.

### Exemple 1 (selon l'art antérieure)

Cet exemple concerne la réaction d'oligomérisation d'une coupe C3 insaturée sur lit fixe. Un catalyseur de type zéolithe mordenite désaluminée ayant un rapport molaire Si/Al de 57 a été testé pour la réaction d'oligomérisation du propène, après mise sous forme de billes avec un liant alumine. La réaction est faite dans un réacteur conventionnel en lit fixe. Le catalyseur utilisé est mis en forme de billes sphériques de 3 mm de diamètre.

La charge utilisée pour ce test est une charge issue du vapocraquage qui contient 94% en poids de propène et 6% en poids de propane.

Les conditions ont été choisies de manière à optimiser la formation de la coupe diesel dans l'oligomérat produit.

Les conditions opératoires sont les suivantes :

| | |
|---|---|
| Température de la charge en entrée du réacteur | 210°C |
| Pression | 5,5 MPa |
| VVH | 0,7 h⁻¹ |

| | |
|---|---|
| (VVH = débit volumique de charge par volume de catalyseur) | |

Les résultats obtenus sont reportés dans le tableau 1.

**Tableau 1**

| | |
|---|---|
| Zéolithe | MOR |
| Rapport molaire Si/Al | 57 |
| Composition billes | 20% pds Al₂O₃ / 80% pds zéolithe |
| Température entrée réacteur (°C) | 210 |
| Température sortie réacteur (°C) en début de test | 247 |
| | |
| Désactivation du catalyseur (% de conversion perdu par jour) | 1,4 |
| Oligomère C5+ (%poids) | 83,3 |
| Coupe diesel (> 180°C, %poids) | 77,6 |
| Indice de cétane moteur* | 38 |

| | |
|---|---|
| *après hydrogénation | |

### Exemple 2 (selon l'invention)

L'exemple 2 correspond à la même réaction que celle de l'exemple 1, utilisant le même catalyseur mis en oeuvre dans un dispositif réactionnel selon l'invention, tel que celui de la figure 1.

Le réacteur comprend deux zones réactionnelles notées Zb (zone initiale (3b)) et Za (zone finale (3a)), en série, séparées par une zone intermédiaire comprenant un système de refroidissement à eau constituant l'échangeur thermique.

La charge, les conditions de test et le catalyseur sont les mêmes que pour l'exemple 1.

La charge et le catalyseur circulent à contre-courant.

Le débit volumique de charge par volume de catalyseur (VVH) a été calculé en fonction de la masse totale de catalyseur sur les deux zones réactionnelles. L'appoint de catalyseur frais et régénéré est fait de manière à maintenir une conversion stable dans les deux zones réactionnelles.

On soutire 20% du catalyseur usé issu de la zone réactionnelle supérieure, que l'on remplace par du catalyseur régénéré en quantité identique, pour accroître l'activité catalytique dans la zone réactionnelle inférieure.

La température du liquide de refroidissement est réglée pour que la température de réaction à l'entrée de la deuxième zone réactionnelle soit égale à 210°C. Le fluide de refroidissement utilisé est de l'eau introduite à 25°C.

Les résultats obtenus sont reportés dans le tableau 2.

**Tableau 2**

| Zéolithe | MOR |
|---|---|
| Rapport molaire Si/Al | 57 |
| Température entrée zone réactionnelle Zb (°C) | 210 |
| Température sortie zone réactionnelle Zb (°C) | 227 |
| Température entrée zone réactionnelle Za (°C) | 210 |
| Température sortie zone réactionnelle Za (°C) | 225 |
| Oligomère C5+ (%poids) | 86,5 |
| Coupe diesel (> 180°C, %poids) | 81,2 |
| Indice de cétane moteur* | 38 |

| | |
|---|---|
| * après hydrogénation | |

### Exemple 3 (selon l'art antérieur)

L'exemple 3 consiste en une réaction d'oligomérisation d'une coupe C4 insaturée mise en oeuvre en lit fixe. Le catalyseur utilisé est sous forme de billes sphériques de 3mm de diamètre.

Ce catalyseur de type zéolithe mordenite désaluminée ayant un rapport molaire Si/Al de 57 est utilisé pour la réaction d'oligomérisation d'une coupe contenant 60% poids de butène insaturé, 3% poids d'iso butène, 11% poids de n-butane et 26% poids d'isobutane.

La réaction est conduite dans un réacteur en lit fixe conventionnel.

Les conditions ont été choisies de manière à optimiser la formation de la coupe diesel dans l'oligomérat produit. Les conditions opératoires sont les suivantes :

| | |
|---|---|
| Température de la charge en entrée du réacteur | 210°C |
| Pression | 6,0 MPa |
| VVH | 1,0 h⁻¹ |

### (VVH = débit volumique de charge par volume de catalyseur)

Les résultats obtenus sont reportés dans le tableau 3.

**Tableau 3**

| Zéolithe | MOR |
|---|---|
| Rapport molaire Si/Al | 57 |
| Composition billes | 40% pdsAl₂O₃ / 60% pds zéolithe |
| Température entrée réacteur (°C) | 210 |
| Température sortie réacteur (°C) en début de test | 233 |
| | |
| Désactivation du catalyseur (% de conversion perdu par jour) | 0.9 |
| Coupe diesel (> 180°C, %poids) | 83,6 |
| Indice de cétane moteur* | 40 |

| | |
|---|---|
| * après hydrogénation | |

### Exemple 4 (selon l'invention)

L'exemple 4 consiste à mettre en oeuvre la même réaction que celle de l'exemple 3 dans un dispositif réactionnel conforme à l'invention, tel que celui de la figure 1, en utilisant le même catalyseur.

La réaction est conduite dans un réacteur comprenant deux zones réactionnelles en série , notées Zb (zone initiale (3b)) et Za (zone finale (3a)), séparées par une zone intermédiaire comprenant un système de refroidissement à eau constituant l'échangeur thermique.

La charge, les conditions de test et le catalyseur sont les mêmes que pour l'exemple 3.

La charge et le catalyseur circulent à contre-courant. Le débit volumique de charge par volume de catalyseur (VVH) a été calculé en fonction de la masse totale de catalyseur sur les deux zones réactionnelles.

L'appoint de catalyseurs frais et régénéré est fait de manière à maintenir une conversion stable dans les deux zones réactionnelles.

On soutire 20% du catalyseur usé issu de la zone réactionnelle supérieure, que l'on remplace par du catalyseur régénéré en quantité identique, pour accroître l'activité catalytique dans la zone réactionnelle inférieure.

La température du liquide de refroidissement (eau à 25°C) est réglée pour que la température de réaction à l'entrée de la deuxième zone réactionnelle soit égale à 210°C.

Les résultats obtenus sont reportés dans le tableau 4.

**Tableau 4**

| Zéolithe | MOR |
|---|---|
| Rapport molaire Si/Al | 57 |
| Température entrée zone réactionnelle Zb (°C) | 210 |
| Température sortie zone réactionnelle Zb (°C) | 222 |
| Température entrée zone réactionnelle Za (°C) | 210 |
| Température sortie zone réactionnelle Za (°C) | 219 |
| Coupe diesel (> 180°C, %poids) | 88,1 |
| Indice de cétane moteur* | 40 |

| | |
|---|---|
| * après hydrogénation | |

### Exemple 5 (selon l'art antérieur)

L'exemple 5 consiste à mettre en oeuvre la réaction d'oligomérisation d'une coupe C6 insaturée au moyen d'un catalyseur de type zéolithe mordenite désaluminée ayant un rapport molaire Si/Al de 57. Ce catalyseur est utilisé sous forme de billes sphériques de 3 mm de diamètre. La réaction est réalisée dans un réacteur conventionnel en lit fixe.

La charge utilisée pour ce test contient 72% en poids de C6 insaturés oléfiniques, 7% en poids de C6 insaturés paraffiniques, 18% de C9 insaturés oléfiniques, 3% de C12 insaturés oléfiniques. Les conditions ont été choisies de manière à optimiser la formation de la coupe diesel dans l'oligomérat produit. Les conditions opératoires sont les suivantes :

| | |
|---|---|
| Température de la charge en entrée du réacteur | 230°C |
| Pression | 6,0 MPa |
| VVH | 1 h⁻¹ |

### (VVH = débit volumique de charge par volume de catalyseur)

Les résultats obtenus sont reportés dans le tableau 5.

**Tableau 5**

| Zéolithe | MOR |
|---|---|
| Rapport molaire Si/Al | 57 |
| Composition billes | 20% pdsAl₂O₃ / 80% pds zéolithe |
| Température entrée réacteur (°C) | 230 |
| Température sortie réacteur (°C) | 244 |
| Désactivation du catalyseur (% de conversion perdu par jour) | 1.2 |
| Coupe diesel (> 180°C, %poids) | 60,7 |
| Indice de cétane moteur* | 43 |

| | |
|---|---|
| * après hydrogénation | |

### Exemple 6 (selon l'invention)

L'exemple 6 consiste à mettre en oeuvre la même réaction que celle de l'exemple 5 dans un dispositif réactionnel selon l'invention, tel que celui de la figure 1.

La réaction est conduite dans un réacteur comprenant deux zones réactionnelles en série notées Zb (zone initiale (3b)) et Za (zone finale (3a)), séparées par une zone intermédiaire comprenant un système de refroidissement à eau constituant l'échangeur thermique.

La charge, les conditions de test et le catalyseur sont les mêmes que pour l'exemple 5.

La charge et le catalyseur circulent à contre-courant. Le débit volumique de charge par volume de catalyseur (VVH) a été calculé en fonction de la masse totale de catalyseur sur les deux zones réactionnelles. L'appoint de catalyseur frais et régénéré est fait de manière à maintenir une conversion stable dans les deux zones réactionnelles.

On soutire 20% du catalyseur usé issu de la zone réactionnelle supérieure, que l'on remplace par du catalyseur régénéré en quantité identique, pour accroître l'activité catalytique dans la zone réactionnelle inférieure.

La température du liquide de refroidissement est réglée pour que la température de réaction à l'entrée de la deuxième zone réactionnelle soit égale à 230°C. Le fluide de refroidissement est de l'eau à 25°C. Les résultats obtenus sont reportés dans le tableau 6.

**Tableau 6**

| Zéolithe | MOR |
|---|---|
| Rapport molaire Si/Al | 57 |
| Température entrée zone réactionnelle Zb (°C) | 230 |
| Température sortie zone réactionnelle Zb (°C) | 238 |
| Température entrée zone réactionnelle Za (°C) | 230 |
| Température sortie zone réactionnelle Za (°C) | 235 |
| Coupe diesel (> 180°C, %poids) | 65,4 |
| Indice de cétane moteur* | 43 |

| | |
|---|---|
| * après hydrogénation | |

Les exemples ci-dessus montrent que l'utilisation du dispositif réactionnel selon la présente invention pour la réaction d'oligomérisation de charges oléfiniques allant de C3 à C6 apporte plusieurs améliorations majeures :
- L'appoint de catalyseur neuf permet un rééquilibrage au moins partiel de l'activité catalytique entre les zones réactionnelles, ce qui est favorable au rendement de la coupe diesel.
- Le système de régénération continu d'une partie du catalyseur permet de fonctionner sans avoir à arrêter l'unité pour changer le catalyseur.
- La zone d'échange thermique située entre les deux zones réactionnelles permet une amélioration de l'homogénéité de la température dans les deux zones réactionnelles. Par exemple dans le cas des exemples 5 et 6, la différence de température entre l'entrée et la sortie de chacune des zones est de 8°C (zone 1) et 5°C (zone 2), en comparaison avec une différence de 14°C dans le cas d'un lit fixe.

Cette homogénéité de température, associée au maintien d'une activité catalytique sans disparités importantes, entraîne une augmentation du rendement de la coupe diesel de 4,5 points dans le cas de l'exemple 2 par rapport à l'exemple 1; de 3,6 points dans le cas de l' exemple 4 par rapport à l'exemple 3 et de 4,7 points dans le cas de l'exemple 6 par rapport à l'exemple 5.
- Enfin, le réacteur est compact, présente un volume catalytique élevé et peut cependant comprendre un échangeur thermique intégré.

## Revendications

1. Dispositif réactionnel comprenant un réacteur catalytique de forme allongée le long d'un axe sensiblement vertical, ce réacteur comprenant dans une même enceinte plusieurs zones réactionnelles catalytiques étagées verticalement, ce réacteur étant adapté à la circulation d'au moins un catalyseur granulaire en lit mobile descendant successivement dans chacune des zones réactionnelles, et comprenant des moyens (100) d'introduction et (101) d'évacuation d'un fluide réactionnel, des moyens (102) d'amenée de catalyseur frais ou régénéré en tête de l'enceinte réactionnelle, et des moyens (105) d'évacuation de catalyseur usé en partie inférieure de l'enceinte, ce réacteur comprenant notamment :
a) une zone réactionnelle supérieure Za (3a), et une zone réactionnelle Zb (3b), située juste en dessous de la zone réactionnelle supérieure Za, ces zones réactionnelles Za et Zb étant deux zones réactionnelles successives directement reliées d'une part par un passage du fluide réactionnel, et d'autre part par un passage de catalyseur de la zone Za vers la zone Zb.
b) des moyens d'introduction (2a) de catalyseur régénéré et/ou de catalyseur frais (102) dans la zone réactionnelle supérieure Za (3a),
c) une zone de collecte (4a) du catalyseur usé issu de la zone réactionnelle supérieure Za, reliés à :
d) des moyens de soutirage et d'évacuation (104) d'une partie dudit catalyseur usé issu de la zone réactionnelle supérieure Za ;
e) une chambre de mélange (7) d'une partie au moins du catalyseur usé ainsi collecté avec un appoint de catalyseur frais ou régénéré introduit par une ligne (103), reliés à :
f) des moyens d'introduction du mélange de catalyseurs ainsi réalisé dans la zone réactionnelle Zb (3b).

2. Dispositif selon la revendication 1, dans lequel les deux zones réactionnelles successives Za et Zb sont reliées par un circuit de circulation du fluide réactionnel traversant un moyen d'échange thermique (8), interne ou externe audit réacteur.

3. Dispositif selon la revendication 2, dans lequel ledit moyen d'échange thermique (8) est disposé à l'intérieur du réacteur, dans une zone intermédiaire (22) située entre les deux zones réactionnelles successives Za et Zb.

4. Dispositif selon la revendication 3, dans lequel ledit moyen d'échange thermique (8) est un échangeur de chaleur disposé dans ladite zone intermédiaire, au niveau d'un rétrécissement du passage de catalyseur de la zone Za vers la zone Zb.

5. Dispositif selon l'une des revendications 1 à 4, dans lequel ladite zone intermédiaire comprend des moyens d'introduction (10) d'un ou plusieurs fluides réactionnels additionnels (106), et de mélange de ce ou ces fluides avec le fluide réactionnel circulant entre les zones réactionnelles successives Za et Zb.

6. Procédé de conversion chimique de charges hydrocarbonées utilisant un dispositif selon l'une quelconque des revendications 1 à 5.

7. Procédé selon la revendication 6 d'oligomérisation de charges oléfiniques ayant de 2 à 12 atomes de carbone.

8. Procédé selon la revendication 7, dans lequel la pression est comprise entre 0,1 et 10 MPa, la température est comprise entre 40 et 600°C, la vitesse spatiale horaire VVH est comprise entre 0,01 et 100 h⁻¹ et dans lequel le catalyseur circule dans chaque zone réactionnelle à une vitesse comprise entre 1 cm/heure et 200 cm/heure.

9. Procédé selon l'une quelconque des revendications 6 à 8 dans lequel on choisit les conditions opératoires : température, pression, VVH, de façon à limiter la variation de température dans chacune des zones réactionnelles à une ou plusieurs valeurs comprises entre 2°C et 50°C.

## Patentansprüche

1. Reaktionsvorrichtung, welche entlang einer im Wesentlichen vertikalen Achse einen katalytischen Reaktor von länglicher Form umfasst, wobei der Reaktor innerhalb ein- und derselben Kammer mehrere, stufenweise vertikal angeordnete Reaktionsbereiche umfasst, wobei der Reaktor von mindestens einem granulatförmigen Katalysator im Fließbettzustand absteigend durchströmt werden kann, sodass letzterer nacheinander in die einzelnen Reaktionsbereiche gelangt, und er Mittel zum Einleiten (100) und zum Abführen (101) eines Reaktionsfluids umfasst sowie, am Kopf der Reaktionskammer, Mittel zum Zuführen (102) frischen oder regenerierten Katalysators und, im unteren Abschnitt der Kammer, Mittel zum Abführen (105) von verbrauchtem Katalysator, wobei der Reaktor insbesondere Folgendes umfasst:
a) einen oberen Reaktionsbereich Za (3a) und einen Reaktionsbereich Zb (3b), der sich unmittelbar unterhalb des oberen Reaktionsbereichs Za befindet, wobei es sich bei den Reaktionsbereichen Za und Zb um zwei aufeinander folgende Reaktionsbereiche handelt, die einerseits über einen Durchgang für das Reaktionsfluid und andererseits über einen Durchgang, durch welchen der Katalysator vom Bereich Za in den Bereich Zb gelangt, direkt miteinander verbunden sind,
b) Mittel zum Einleiten (2a) von regeneriertem Katalysator und/oder frischem Katalysator (102) in den oberen Reaktionsbereich Za (3a),
c) einen Bereich des Auffangens (4a) des verbrauchten Katalysators, der aus dem oberen Reaktionsbereich Za stammt, verbunden mit:
d) Mitteln zum Entnehmen und Abführen (104) einer Teilmenge des verbrauchten Katalysators, der aus dem oberen Reaktionsbereich Za stammt;
e) einer Kammer zum Vermischen (7) mindestens einer Teilmenge des auf diese Weise aufgefangenen Katalysators mit einem Zusatz von frischem oder regeneriertem Katalysator, welcher über eine Leitung (103) eingeleitet wird, verbunden mit:
f) Mitteln zum Einleiten der auf diese Weise hergestellten Katalysatormischung in den Reaktionsbereich Zb (3b).

2. Vorrichtung nach Anspruch 1, wobei die beiden aufeinander folgenden Reaktionsbereiche Za und Zb über ein Kreislaufsystem zum Umwälzen des Reaktionsfluids miteinander verbunden sind, welches durch ein Wärmeaustauschmittel (8) führt, das innerhalb oder außerhalb des Reaktors gelegen ist.

3. Vorrichtung nach Anspruch 2, wobei das Wärmeaustauschmittel (8) im Inneren des Reaktors angeordnet ist, in einem Zwischenbereich (22), der zwischen den beiden aufeinander folgenden Reaktionsbereichen Za und Zb gelegen ist.

4. Vorrichtung nach Anspruch 3, wobei es sich bei dem Wärmeaustauschmittel (8) um einen Wärmetauscher handelt, der in dem Zwischenbereich angeordnet ist, auf Höhe einer Verengung in dem Durchgang, durch welchen der Katalysator vom Bereich Za in den Bereich Zb gelangt.

5. Vorrichtung nach einem der Ansprüche 1 bis 4, wobei der Zwischenbereich Mittel zum Einleiten (10) eines oder mehrerer zusätzlicher Reaktionsfluide (106) und zum Vermischen dieses oder dieser Reaktionsfluide mit dem Reaktionsfluid, welches zwischen den aufeinander folgenden Reaktionsbereichen Za und Zb strömt, umfasst.

6. Verfahren zur chemischen Umwandlung kohlenwasserstoffhaltiger Chargen, wobei eine Vorrichtung nach einem der Ansprüche 1 bis 5 verwendet wird.

7. Verfahren nach Anspruch 6 zur Oligomerisierung von olefinischen Chargen mit 2 bis 12 Kohlenstoffatomen.

8. Verfahren nach Anspruch 7, wobei der Druck im Bereich von 0,1 bis 10 MPa liegt, die Temperatur im Bereich von 40 und 600 °C liegt, die stundenbezogene Raumgeschwindigkeit (VVH) im Bereich von 0,01 bis 100 h⁻¹ liegt, und wobei der Katalysator die einzelnen Reaktionsbereiche mit einer Geschwindigkeit im Bereich von 1 cm/Stunde bis 200 cm/Stunde durchströmt.

9. Verfahren nach einem beliebigen der Ansprüche 6 bis 8, wobei die Betriebsbedingungen von Temperatur, Druck, VVH derart gewählt werden, dass die Temperaturänderung in den einzelnen Reaktionsbereichen auf einen oder mehrere Werte beschränkt wird, die im Bereich von 2 °C bis 50 °C liegen.

## Claims

1. Reaction device comprising a catalytic reactor of elongated shape along an essentially vertical axis, whereby this reactor comprises several vertically-staged catalytic reaction zones in the same diameter, whereby this reactor is suitable for the circulation of at least one moving-bed granular catalyst that descends successively into each of the reaction zones and comprises means (100) for introducing and means (101) for evacuating a reaction fluid, means (102) for bringing in fresh or regenerated catalyst at the top of the reactor, and means (105) for evacuating spent catalyst in the lower portion of the chamber, whereby this reactor comprises in particular:
a) An upper reaction zone Za (3a), and a reaction zone Zb (3b), located just below upper reaction zone Za, whereby these reaction zones Za and Zb are two successive reaction zones that are connected directly, on the one hand, by a passage of reaction fluid and, on the other hand, by a passage of catalyst from zone Za to zone Zb.
b) Means (2a) for introducing regenerated catalyst and/or fresh catalyst (102) into upper reaction zone Za (3a),
c) Means (4a) for collecting spent catalyst that is obtained from upper reaction zone Za, connected to:
d) Means (104) for drawing-off and evacuating a portion of said spent catalyst obtained from upper reaction zone Za
e) Means (7) for mixing at least a portion of spent catalyst thus collected with an addition of fresh or regenerated catalyst, connected to:
f) Means for introducing the catalyst mixture thus produced in reaction zone Zb (3b).

2. Device according to claim 1, in which two successive reaction zones Za and Zb are connected by a circuit for circulation of the reaction fluid that passes through a heat exchange means (8) that is internal or external to said reactor.

3. Device according to claim 2, in which said heat exchange means (8) is located inside the reactor, in an intermediate zone (22) located between two successive reaction zones Za and Zb.

4. Device according to claim 3, in which said heat exchange means (8) is a heat exchanger that is located in said intermediate zone at a constriction in the path of a catalyst from zone Za to zone Zb.

5. Device according to one of claims 1 to 4, in which said intermediate zone comprises means (10) for introducing one or more additional reaction fluids (106) and for mixing this fluid or these fluids with the reaction fluid that circulates between successive reaction zones Za and Zb.

6. Process for chemical conversion of hydrocarbon feedstocks using a device according to any of claims 1 to 5.

7. Process according to claim 6 for oligomerization of olefinic feedstocks that have 2 to 12 carbon atoms.

8. Process according to claim 7, in which the pressure is between 0.1 and 10 MPa, the temperature is between 40 and 600°C, the hourly volumetric flow rate VVH is between 0.01 and 100 h-1, and in which the catalyst circulates in each reaction zone at a speed of between 1 cm/hour and 200 cm/hour.

9. Process according to any of claims 6 to 8, in which the operating conditions are selected: temperature, pressure, VVH, so as to limit the temperature variation in each of the reaction zones to one or more values of between 2°C and 50°C.
